# EUROPEAN PATENT APPLICATION

(11) **EP 3 176 507 A1**
(43) Date of publication of application: **07.06.2017**
(21) Application number: 14898679.7
(22) Date of filing: 07.08.2014
(51) Int. Cl.: F23R 7/00, F02K 7/067, F02C 5/11

(54) **METHOD FOR THE DETONATION COMBUSTION OF FUEL MIXTURES AND APPARATUS FOR CARRYING OUT SAME**

(30) Priority: 01.08.2014 RU 2014131936
(71) Applicant: Airbus Group Innovations Sk LLC, Moscow 109028 (RU); Lavrentyev Institute of Hydrodynamics of Siberian Branch of Russian Academy of Sciences, Novosibirsk 630090 (RU)
(72) Inventor: BYKOVSKIJ, Fedor Afanasevich, Novosibirsk 930090 (RU); ZHDAN, Sergej Andreevich, Novosibirsk 930090 (RU); VEDERNIKOV, Evgenij Fedorovich, Berdsk 633001 (RU)
(74) Representative: Chimini, Francesco
(86) International application number: PCT/RU2014/000592
(87) International publication number: WO 2016/018171

(57) **Abstract**

The invention relates to fuel mixture detonative combustion methods and devices and can be used for combustion of various types of fuel. Its applications will include flying and ground vehicle engines, stationary power plants and chemical industry. Additional pre-turbulized air is supplied into the combustion chamber downstream of the detonation wave front and upstream of the products exit section. The device includes a means for additional air supply, comprising in its turn an air turbulization means, said supply device being located in the detonation chamber wall(s) downstream of the chamber portion where the fuel mixture undergoes complete detonative combustion and before the chamber outlet. The application of the claimed method and device will help boost the chamber's functional capabilities, enhance the efficiency of the detonative fuel combustion method, increase the producibility and cost efficiency of the new method and device and reduce the dimensions of the combustion chamber. The invention can be used in combustion chambers tailored for various applications, such as flying and ground vehicle engines, stationary power plants, MHD generators, chemical reactors and other devices. It supports a broad variety of fuels, including gaseous, liquid and finely divided solid fuels forming combustible mixtures when mixed with air. The invention makes it possible to use combustion chambers of different geometries best suited for specific fuel combustion environments.

## Description

The invention relates to power engineering and can be used for combustion of various types of fuel. Its applications will range from flying and ground vehicle engines to stationary power plants and chemical industry.

Diverse methods for detonative combustion of fuel mixtures and devices implementing such methods are known to date, as evidenced by multiple patents: patent RU No. 2 459 150 (2009) [1], patent RU No. 2285143 (2004) [2], patent RU No. 2330979 (2006) [3], patent No. US 2005/0284127 (2005) [4], application RU No. 93001763 (1995) [5], patent RU No. 2294446 (2004) [6], patent FR No. 2004/001313 (2004) [7], patent EP 2 525 070 (2012) [8], patent RU No. 2435060 (20011) [9], application RU No. 93046334 (1993) [10], patent RU No. 2003923 (1993) [11], patent EP No. 2525062 (2012) [12].

Conventional turbulent combustion which has come nearly to the end of its resources is sometimes replaced with detonative combustion. Detonative combustion is known to occur in longitudinal pulsating waves and in rotating (spin) detonation waves: the two regimes are described, for example, in the patents [1 - 10]. However the known detonation methods and devices display several shortcomings. Some involve forced injection of an oxidizer jet [10], others use a compressor and high-velocity air supply into flow-type combustion chambers [1,2,4,8], whereas the pulse detonation engines provide cyclic (periodic) initiation of mixture detonation using a system of valves for components supply [3,5,6,7,10]. Other known methods involve detonation mixture preformation before the combustion chamber, which runs contrary to the explosion safety regulations, or use flow-swirling blades to generate centrifugal forces which produce a pressure gradient and mixture ingestion in the chamber while creating an additional hydrodynamic resistance [4].

The claimed method is most similar in its technical nature to the method described in the patent RU No. 2003923 (1993) [11], which the applicant has chosen as the prototype.

The known method involves separate injection of oxidizer and fuel, with the oxidizer supplied in equidistant counter-jets for the combustible mixture to form a homogeneous annular layer. Once the layer reaches a thickness h, detonation is initiated and fuel and oxidizer are supplied continuously while maintaining the detonable layer proportion at 1 ≥ (6-15) h, where h is the critical dimension of the combustible mixture detonation and 1 is the length of the closed annular layer.

Thus the known method comprises separate supply of fuel mixture components (fuel proper and oxidizer) in equidistant counter-jets that form a homogeneous annular layer of combustible mixture such that self-sustaining spin (rotating) detonation is initiated in the layer and continues as long as the mixture components keep flowing into the chamber.

However the known method has obvious shortcomings in terms of functional capabilities, producibility and cost efficiency.

In the applicant's opinion, the claimed device is most similar in its technical nature to the device described in the patent EP No. 2525062 (2012) [12].

The known device comprises an annular cylindrical detonative combustion chamber, an annular channel for air supply into the chamber and secondary circuit, fuel injectors, an air intake, an air compressor, a power turbine and an exit nozzle. In the course of operation the air is supplied to the air intake and compressed by the compressors in the primary and secondary circuits. Once in the chamber, the air is mixed with the fuel coming through the injectors and burned in the rotating detonation wave. The air in the secondary circuit facilitates the chamber wall cooling and gets mixed with the detonation products at the chamber outlet.

However the known device has definite shortcomings in terms of functional capabilities, producibility and cost efficiency. In the device, admixing air with the combustion products at the chamber outlet has no effect on the processes occurring inside the chamber and, in particular, on the pressure surge that dictates the chamber dimensions. Besides, it fails to ensure full mixing of air and combustion products.

Thus both the known method and device have apparent drawbacks, such as lack of functional capabilities, producibility and cost efficiency.

The claimed inventions aim to enhance the functional capabilities, producibility and cost efficiency of the detonative combustion method and associated device.

The claimed method is expected to address the task by introducing additional air supply inside the chamber downstream of the detonation wave front and upstream of the products exit section, as opposed to the known method involving forced air (oxidizer) and fuel injection into the chamber.

Additional air supplied into the chamber is uniformly distributed along the circumference at an angle to the oxidizer (air) flow direction toward the chamber exit or is uniformly distributed in a specific pattern along the circumference over the chamber walls. The air is further turbulized and mixed with the products forming as a result of detonative combustion near the chamber inlet, and the flow pressure in the chamber is increased.

Thus in contrast to the known detonative combustion method with separate fuel and air supply into the chamber and initiation of the fuel mixture detonation, the invention provides additional supply of pre-turbulized air into the chamber downstream of the critical width "h" (designated as "h" in the prototype) of the detonation wave front. The air is uniformly supplied along the circumference or over the entire chamber wall surface in a specific pattern (dictated in each particular case by heat flows into the walls and turbulized air and products mixing conditions) at an angle to the products flow. Additional air is injected along the flow through a row of holes or annular slits in the direction to the chamber outlet.

To deal with the task, the claimed method is implemented in the combustible mixture detonation device which, according to the invention, comprises an additional air (oxidizer) supply means with integrated air turbulization means, as opposed to the known device containing an annular combustion chamber, a propellant (fuel) and oxidizer (air) mixing system placed near the chamber inlet, a mixture supply system comprising uniformly spaced fuel and oxidizer (air) holes (injectors), an outlet for combustion products and an ignition source; the additional turbulized air supply means is located in the detonation chamber wall(s) below the chamber portion where the fuel mixture undergoes complete detonative combustion and before the chamber outlet. That is to say that the above additional turbulized air supply means is located downstream of the critical front width of the rotating or tangentially pulsating detonation wave.

[0017]Additional air penetrates into the chamber through the holes and the annular slit or both, said holes and slit being located in the chamber walls and serving simultaneously as turbulizers of air and oncoming product flows. That is, the annular slit, holes or their combination can act as an additional turbulized air supply means.

We note that the holes, annular slit or their combination used for additional air supply are placed at an angle to the oxidizer flow and oriented so as to act as flow turbulizers. The additional air simultaneously cools the chamber walls before and after it gets into the chamber.

The combustion chamber's annular channel is formed by its outer and inner walls, for instance, cylindrical, conical and/or profiled walls and/or their combination.

Note that the annular channel formed by one cylindrical and two flat radial or conical walls spaced an equal or variable distance apart can be one of the varieties of the combustion chamber's annular channel. In one embodiment of the method fuel and air are supplied from the cylindrical surface toward the periphery with the combustion products flowing out through an open gap between the flat walls, while in the other fuel and air are supplied from the cylindrical surface toward the center. An axisymmetric hole is arranged in one or both flat chamber walls for the combustion products to flow out of the chamber. Additional turbulized air is supplied downstream of the critical width "h" of the detonation wave front through the slits, holes and/or their combination.

It is the claimed design differences and features of the detonative combustion device that enable implementing the claimed detonation method and thus attaining the goal. This leads to the conclusion that the claimed inventions share the same inventive concept.

The technical output that may be derived from the invention consists in enhanced functionality and increased producibility and cost efficiency.

It becomes possible to perform detonative combustion of fuel mixtures at increased pressures in the combustion chamber, while simultaneously cooling the chamber walls. Moreover, as the pressure rises, the transverse detonation waves grow in number and the detonation front size "h" gets smaller. This enables reducing the chamber length and minimum diameter, while ensuring that the device can operate in both the continuous spin detonation and transverse colliding detonation wave modes.

In addition, this increases the combustion chamber cost efficiency and operational reliability.

The invention is explicated by the drawing below.

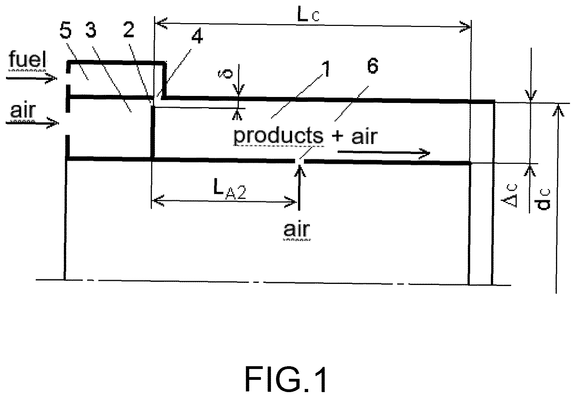

Fig. 1 features the basic diagram of the claimed device for detonative combustion of fuel mixtures (one of possible embodiments).

The device comprises the annular combustion chamber 1 of diameter dc and length Lc formed by the outer and inner walls spaced a distance ΔC apart. The chamber's front end-face has an annular slit 2 of width δ to let in the air from the supply system (manifold 3). Placed opposite the slit 2 is the injector 4 for fuel supply from the manifold 5. The injector 4 consists of several holes uniformly spaced along the circumference of the outer chamber wall 1 and oriented at an angle to the air flow. The additional turbulized air is injected through the means 6 located at a distance LA2 from the front end-face (inlet) of the combustion chamber 1. The means is designed as an annular slit or injector or holes arranged in a certain pattern on the chamber's inner and outer walls.

The claimed method is implemented (the device operates) as follows. Fuel and air continuously supplied into the chamber 1 are mixed to form a detonable mixture. The rotating detonation waves are then incited (initiated) using an electric charge, fusible wire or other thermal pulse. Additional air is injected into the chamber simultaneously or with some delay. The process is continued as long as fuel and air are supplied into the chamber. The method may have other embodiments with additional turbulized air supply distributed over the chamber's inner and outer walls in a specified pattern dictated by the heat flows into the walls and the additional turbulized air and combustion products mixing conditions.

The application of the claimed method and device will help boost the chamber's functional capabilities, enhance the efficiency of the detonative fuel combustion method, increase the producibility and cost efficiency of the new method and device and reduce the dimensions of the combustion chamber.

The invention can be used in combustion chambers tailored for various applications, such as flying and ground vehicle engines, stationary power plants, MHD generators, chemical reactors and other devices. It supports a broad variety of fuels, including gaseous, liquid and finely divided solid fuels forming combustible mixtures when mixed with air. The invention makes it possible to use combustion chambers of different geometries best suited for specific fuel combustion environments.

### Literature

1. Bykovskii F.A., Zhdan S.A., Vedernikov Ye.F. A method for detonative combustion of fuel mixtures and a device implementing such a method. Patent RU No. 2 459 150 (2009).
2. Ivanov M.S., Kudryavtsev M.S., Trotsyuk A.V., Fomin V.M. A detonative combustion method for the supersonic ram-jet engine. Patent RU No. 2285143 (2004).
3. Ulyanitsky V.Yu., Shtertser A.A., Zlobin S.B., Kiryakin A.L. Thrust generation method. Patent RU No. 2330979 (2006).
4. Akihiro Tobita (JP), Toshitaka Fuj iwara (JP), Piotr Wolanski, Warshaw (PL). Detonation engine and flying object provided therewith. United States, Patent Nº US 2005/0284127 A1, 2005 r.
5. Vasilyev K.A. A method for fuel combustion in the combustion chamber. Application RU No. 93001763 (1995).
6. Daniau E. Pulse detonation engine. Patent RU No. 2294446 (2004).
7. Daniau E., Patent FR No. 2004/001313 (2004).
8. FALEMPIN FRANCOIS; LE NAOUR BRUNO. Ramjet engine with detonation chamber and aircraft comprising such a ramjet engine. Patent EP Nº 2525070 (2012 r.)
9. Falempin F., Daniau E., Bobo E., Minard J.-P. Pulse detonation engine operating with an air-fuel mixture. Patent RU No. 2435060 (2011).
10. Antonenko V.F., Mass A.M., Minin S.M., Pushkin R.M., Slovetsky D.I., Smirnov V.I., Tarasov A.I. Thrust generation method and device. Application RU No. 93046334 (1993).
11. Bykovskii F.A., Voitsekhovsky B.V., Mitrofanov V.V. Fuel combustion method. Patent RU No. 2003923 (1993).
12. FALEMPIN FRANCOIS; LE NAOUR BRUNO. Turbomachine with detonation chamber and aircraft provided with such a turbomachine, Patent EP No. 2525062 (2012)

## Claims

1. A method for detonative combustion of fuel mixtures, comprising a separate supply of fuel and air into the combustion chamber and initiation of detonative combustion in the forming mixture, **characterized in that** it provides additional pre-turbulized air supply and mixing with detonation products downstream of the critical width of the detonation wave front and upstream of the products exit section, said pre-turbulized air being distributed over the chamber walls at an angle to the flow in a certain pattern dictated by the heat flows into the chamber walls and the additional turbulized air and products mixing conditions, said turbulized air being supplied along the flow, for example, through a row of holes or annular slits in the direction of the chamber outlet.

2. A device for a detonative combustion of fuel mixtures according to claim 1, comprising an annular combustion chamber, a fuel and air mixing system placed near the chamber inlet and a fuel supply system, **characterized in that** it includes an additional air supply means, comprising in its turn air turbulization means, said supply means being located in the detonation chamber wall(s) below the chamber portion where the fuel mixture undergoes complete detonative combustion and before the chamber outlet, said supply means being located downstream of the critical width of the rotating or tangentially pulsating detonation wave front and designed, for example, as a set of holes, annular slits or combination thereof, said holes for air supply being located along the circumference or over the entire wall surface in a certain pattern dictated by the heat flows into the chamber walls and the additional air and detonative products mixing conditions, at an angle to the products flow direction.

3. The device according to claim 2, wherein the combustion chamber's annular channel is formed by the cylindrical, conical and/or profiled outer and inner walls.

4. The device according to claim 3, wherein the combustion chamber's annular channel is formed by one cylindrical and two flat radial or conical walls spaced an equal or variable distance apart.
